Europäisches Patentamt

European Patent Office

Office européen des brevets

(11) Veröffentlichungsnummer: **0 330 055 B1**

## (12) EUROPÄISCHE PATENTSCHRIFT

(45) Veröffentlichungstag der Patentschrift: **02.12.92**

(51) Int. Cl.⁵: **H02M 7/48**

(21) Anmeldenummer: **89102529.8**

(22) Anmeldetag: **14.02.89**

(54) Verfahren zur symmetrischen Spannungsaufteilung einer an einem aus n Kondensatoren bestehenden Spannungsteiler anstehenden Gleichspannung und Schaltungsanordnung zur Durchführung des Verfahrens.

(30) Priorität: **22.02.88 DE 3805509**

(43) Veröffentlichungstag der Anmeldung:
**30.08.89 Patentblatt 89/35**

(45) Bekanntmachung des Hinweises auf die Patenterteilung:
**02.12.92 Patentblatt 92/49**

(84) Benannte Vertragsstaaten:
**DE ES FR IT**

(56) Entgegenhaltungen:
**EP-A- 0 209 944**
**DE-A- 2 421 126**
**JP-A-60 219 967**
**US-A- 4 479 175**

(73) Patentinhaber: **SIEMENS AKTIENGESELL-SCHAFT**
**Wittelsbacherplatz 2**
**W-8000 München 2(DE)**

(72) Erfinder: **Fuchs, Andreas, Dr.**
**Eskilstunastrasse 21**
**W-8520 Erlangen(DE)**

## Beschreibung

Die Erfindung bezieht sich auf ein Verfahren zur symmetrischen Spannungsaufteilung einer an einem aus n Kondensatoren bestehenden Spannungsteiler anstehenden Gleichspannung, denen jeweils eine veränderliche Last und ein Stellglied elektrisch parallel geschaltet sind, wobei die Stellglieder mittels Wicklungen mit einem gemeinsamen Kern eingangsseitig elektrisch parallel geschaltet sind und auf eine Schaltungsanordnung zur Durchführung des Verfahrens.

Bei einem derartigen kapazitiven Spannungsteiler besteht die Gefahr, daß durch Lastschwankungen, d.h. jede einem Kondensator dieses kapazitiven Spannungsteilers elektrisch parallel geschaltete Last kann infolge eines elektrischen Fehlers schwanken. Wenn beispielsweise als Last ein stromrichtergespeister Wechselstrommotor vorgesehen ist, der ein Drehmoment abgibt, kann durch äußere Einflüsse die Drehmomentabgabe plötzlich auf annähernd Null absinken, wodurch der Spannungswert am entsprechenden Kondensator des kapazitiven Spannungsteilers, an dem eine hohe Gleichspannung ansteht, ansteigen, wodurch die Spannungswerte an den anderen Kondensatoren dieses kapazitiven Spannungsteilers sich verringert.

Der Erfindung liegt nun die Aufgabe zugrunde, ein Verfahren zur symmetrischen Spannungsaufteilung einer an einem aus n Kondensatoren bestehenden Spannungsteiler anstehenden Gleichspannung anzugeben.

Diese Aufgabe wird erfindungsgemäß dadurch gelöst, daß n-1 an den n Kondensatoren anstehende Spannungen jeweils mit einem n-ten als Bezugsspannung dienenden Spannungsabfall am n-ten Kondensator verglichen und die dabei erzeugten Differenzspannungen jeweils in einem vorzeichenbehafteten Phasenwinkel umgewandelt werden und daß jeder vorzeichenbehaftete Phasenwinkel einem korrespondierenden Steuersatz eines Stellgliedes zugeführt wird, wodurch die mittels Taktung erzeugten Stellerwechselspannungen beliebiger Frequenz zur Bezugsstellerwechselspannung entsprechend dem Phasenwinkel phasenverschoben werden, wodurch jeweils ein Ausgleichsstrom zwischen den n Kondensatoren über die Stellglieder zum Fließen kommt.

Jedem Kondensator dieses kapazitiven Spannungsteilers ist einerseits eine veränderliche Last und andererseits ein Stellglied zugeordnet. Die Stellglieder dieses Spannungsteilers sind eingangsseitig mittels Wicklungen, die gemeinsam auf einen Kern aufgebracht sind, elektrisch parallel geschaltet. Jedes Stellglied wird mittels eines Steuersatzes derart angesteuert, daß es aus der am Kondensator anstehenden Gleichspannung eine pulsbreitenmodulierte Stellereingangswechselspannung erzeugen kann. Dabei ist das Stellglied mit zugehörigem Steuersatz so aufgebaut, daß die Stellerwechselspannung und der Stellerwechselstrom jeweils beide Polaritäten annehmen können. Deshalb wird das Stellglied auch als Vierquadrantensteller bezeichnet und ist im Handel erhältlich.

Jedem Steuersatz eines Stellgliedes wird in Abhängigkeit einer Differenzgleichspannung einem Phasenwinkel zugeführt, wodurch die Stellerwechselspannung betragsmäßig konstant bleibt, jedoch um den Betrag des Phasenwinkels phasenverschoben wird. Dabei bestimmt das Vorzeichen des Phasenwinkels, ob die Stellerwechselspannung zu einer Bezugsstellerwechselspannung kapazitiv oder induktiv phasenverschoben wird. Dadurch kommt jeweils ein Ausgleichsstrom zwischen den einzelnen Kondensatoren des Spannungsteilers über die Stellglieder zum Fließen, d.h. es werden Leistungen von einem zum anderen Kondensator verschoben, bis die am kapazitiven Spannungsteiler anstehende hohe Gleichspannung unabhängig von den veränderlichen Lasten symmetrisch auf die einzelnen Kondensatoren aufgeteilt ist.

Außerdem ist jede Stellerwechselspannung bei vorgegebenem Aussteuerungsverhältnis mittels einer jeweils einem Steuersatz eines Stellgliedes zugeführten Sollspannung regelbar. Dadurch wird erreicht, daß die Trafospannung, d.h die Spannung, mit der der Transformator belastet wird, konstant gehalten werden kann. Somit ist auch die Spannung für Hilfsbetriebe, die über eine weitere Sekundärwicklung mit dem Transformator verbunden ist, konstant, wobei die Hilfsbetriebsleistung über die Stellglieder aus dem Gleichstromnetz bezogen wird.

Bei einer vorteilhaften Schaltungsanordnung zur Durchführung des Verfahrens mit einem aus n Kondensatoren bestehenden Spannungsteiler, deren Kondensatoren jeweils eine veränderliche Last und ein Stellglied elektrisch parallel geschaltet sind, wobei die Stellglieder mittels Wicklungen, die an einem Kern angebracht sind, eingangsseitig elektrisch parallel geschaltet sind, sind invertierende Eingänge n-1 Vergleicher jeweils mit einem Normglied der n-1 Kondensatoren verknüpft, wobei die nichtinvertierenden Eingänge der n-1 Vergleicher mit einem Normglied des n-ten Kondensators verknüpft sind und ist jeder Ausgang der n-1 Vergleicher über einen Spannungsphasenwinkel Wandler mit einem Steuersatz eines jeweils dem invertierenden Eingang des Vergleichers korrespondierenden Stellgliedes verbunden, wobei ein Taktgenerator mit jedem Steuersatz verknüpft ist.

Mit dieser Schaltungsanordnung kann man die am kapazitiven Spannungsteiler anstehende Gleichspannung bei veränderlichen Lasten symmetrisch aufteilen und in dieser symmetrischen Aufteilung halten bei auftretenden Lastschwankungen.

Zur weiteren Erläuterung der Erfindung wird auf die Zeichnung Bezug genommen, in der Ausführungsbeispiele nach der Erfindung schematisch veranschaulicht sind.

FIG 1      zeigt eine Schaltungsanordnung zur Durchführung des erfindungsgemäßen Verfahrens, in

FIG 2      ist ein Ersatzschaltbild der Wechselstromseite der eingangsseitig elektrisch parallel geschalteten Stellglieder nach FIG 1 dargestellt, in den

FIG 3 bis 5      sind Zeigerdiagramme nach dem Ersatzschaltbild der FIG 2 für verschiedene unsymmetrische Spannnungsaufteilungen der am Spannungsteiler anstehenden Gleichspannung infolge von Lastschwankungen dargestellt und die

FIG 6      veranschaulicht einen Traktionsantrieb für vier Spannungssysteme mit vier Traktionsstromrichtern.

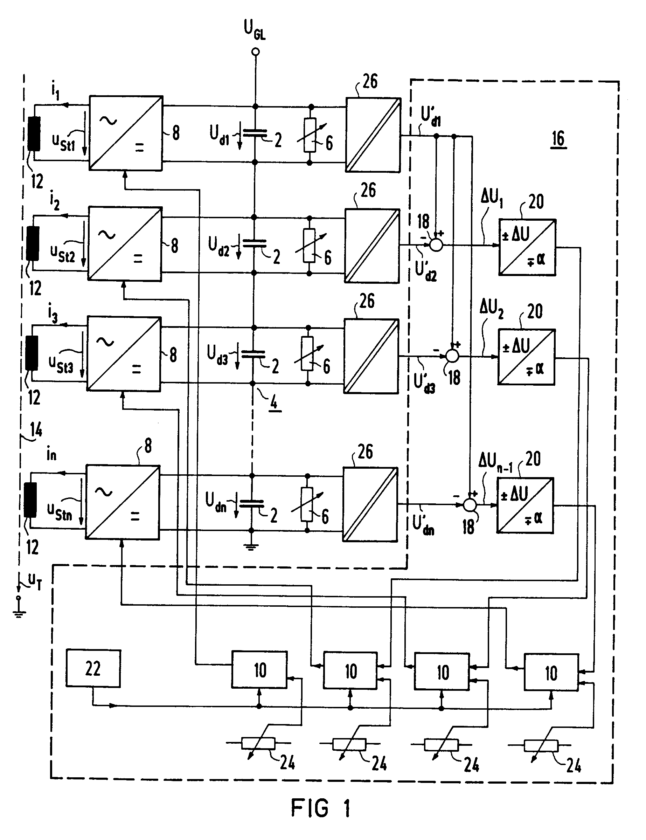

Die FIG 1 zeigt einen aus n Kondensatoren 2 bestehenden Spannungsteiler 4, wobei jedem Kondensator 2 einerseits eine veränderliche Last 6 und andererseits ein Stellglied 8 elektrisch parallel geschaltet ist. Am Eingang des kapazitiven Spannungsteilers 4 steht eine hohe Gleichspannung $U_{GL}$ an, die sich in die Spannungen $U_{d1}$ bis $U_{dn}$ aufteilt. Wenn eine symmetrische Lastverteilung vorliegt, so sind die Spannungen $U_{d1}$ bis $U_{dn}$ an den Kondensatoren 2 alle gleich. Jedes Stellglied 8 wird mittels eines Steuersatzes 10 so gesteuert, daß jeweils am Stellgliedeingang eine pulsbreitenmodulierte Stellerwechselspannung $u_{St1}$ ... bzw. $U_{Stn}$ ansteht, dessen Frequenz und Amplitude einstellbar ist. Eingangsseitig sind die Stellglieder 8 jeweils mit einer Wicklung 12 versehen, die gemeinsam auf einen Kern 14 gegeben sind. Diese auf den Kern 14 aufgebrachten Wicklungen 12 können auch die Sekundärwicklungen eines Transformators sein. Die Steuersätze 10 sind in einer Steuervorrichtung 16 zusammengefaßt. Die Steuervorrichtung 16 enthält außerdem noch n-1 Vergleicher 18, n-1 Spannungs-Phasenwinkel-Wandler 20, einen Taktgenerator 22 und den Sollwertgeber 24, wobei jedem Vergleicher 18 ein Spannungs-Phasenwinkel-Wandler 20 nachgeschaltet ist.

Jeder invertierende Eingang der n-1 Vergleicher 18 ist mit einem Normglied 26 des zweiten bis n-ten Kondensators 2 des Spannungsteilers 4 verknüpft, wobei die nichtinvertierenden Eingänge dieser Vergleicher 18 jeweils mit dem Normglied 26 des ersten Kondensators 2 des Spannungsteilers 4 verbunden sind. Das Normglied 26 erfaßt den Spannungsabfall $U_{d1}$ bzw. $U_{d2}$... bzw. $U_{dn}$ an einem Kondensator 2 des Spannungsteilers 4 und wandelt diese in eine dem Vergleicher 18 verträgliche Spannung $U'_{d1}$ bzw. $U'_{d2}$ ... bzw. $U'_{dn}$, die jedoch proportional dem Spannungsabfall am Kondensator 2 ist, um. Außerdem wird dadurch die Steuervorrichtung 16 vom Spannungsteiler 4 potentialmäßig getrennt. Jeder Vergleicher 18 ermittelt nun die Differenzspannung $\Delta U_1 = U'_{d1} - U'_{d2}$ bzw. $\Delta U_2 = U'_{d1} - U'_{d3}$ ... bzw. $\Delta U_{n-1} = U'_{d1} - U'_{dn}$ zwischen der normierten Kondensatorspannung $U'_{d1}$ und der normierten Kondensatorspannung $U'_{d2}$ bzw. $U'_{d3}$ ... bzw. $U'_{dn}$. Diese Differenzspannungen $\Delta U_1$, $\Delta U_2$, ..., $\Delta U_{n-1}$ werden jeweils einem Spannungs-Phasenwinkel-Wandler 20 zugeführt. Der Ausgang eines jeden Spannungs-Phasenwinkel-Wandlers 20 ist mit einem Eingang eines Steuersatzes 10 verbunden, wobei der einem Kondensator 2 korrespondierende Wandler 20 mit dem dessen Stellglied 8 korrespondierenden Steuersatzes 10 verknüpft ist. Außerdem ist jeder Steuersatz 10 eingangsseitig mit einem Taktgenerator 22 und einem Sollwertgeber 24 für die Amplituden der Stellerwechselspannungen $u_{St1}$ bis $u_{Stn}$ verbunden.

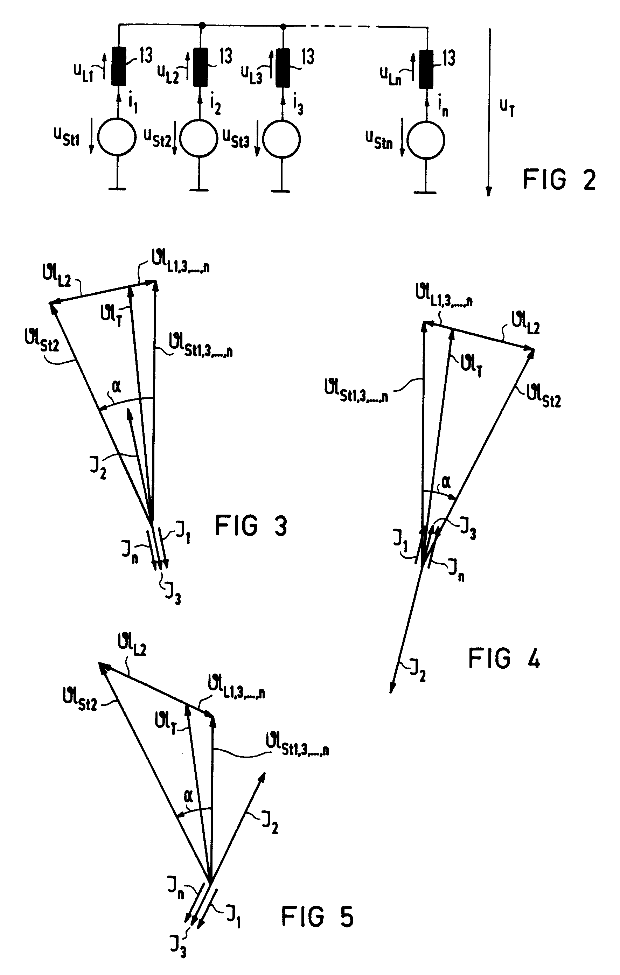

Die FIG 2 zeigt ein Ersatzschaltbild der Wechselstromseite der eingangssseitig elektrisch parallel geschalteten Stellglieder 8. Dabei ist jeweils der Stellereingang der Stellglieder 8 als Wechselspannungsquelle mit einer Wechselspannung $u_{St1}$ bzw. $u_{St2}$ bzw. $u_{St3}$ ... bzw. $u_{Stn}$ dargestellt. Die Wechselspannungsquelle $u_{St1}$ bzw. $u_{St2}$ bzw. $u_{St3}$ ... bzw. $u_{Stn}$ gibt einen Strom $i_1$ bzw. $i_2$ bzw. $i_3$ ... bzw. $i_n$ ab, der an der Streuinduktivität 13 einen Spannungsabfall $u_{L1}$ bzw. $u_{L2}$ bzw. $u_{L3}$ ... bzw. $u_{Ln}$ erzeugt. Die Transformatorspanung $U_T$ ergibt sich dann aus der Differenz der Wechselspannung $u_{St1}$ bzw. $u_{St2}$ bzw. $u_{St3}$ ... bzw. $u_{Stn}$ und dem induktiven Spannungsabfall $u_{L1}$ bzw. $u_{L2}$ bzw. $u_{L3}$ ... bzw. $u_{Ln}$.

In FIG 3 ist ein Zeigerdiagramm zum Ersatzschaltbild nach Flg 2 dargestellt, wobei die Kondensatorspannung $U_{d2}$ infolge eines Leistungseinbruches ansteigt und die anderen Kondensatorspannungen $U_{d1}$, $U_{d3}$, ... $U_{dn}$ gleichmäßig absinken. Dadurch liegt am Spannungsteiler eine unsymmetrische Spannungsaufteilung vor. Die Vergleicher 18 ermitteln die Spannungsdifferenzen $\Delta U_1$ ... $\Delta U_{n-1}$ zwischen der Bezugsspannung $U'_{d1}$, die gleich der Kondensatorspannung $U_{d1}$ des ersten Kondensators 2 des Spannungsteilers 4 ist, und der zweiten bis n-ten Kondensatorspannung $U'_{d1}$ bis $U'_{d1}$. Bei der genannten Voraussetzung sind bis auf die Differenzspannung $\Delta U_1$ des ersten Vergleichers 18 alle Differenzspannungen $\Delta U_2$ ... $\Delta U_n$-1 gleich Null. Der ermittelte Differenzspannungswert ist negativ, so daß am Ausgang des Spannungs-Phasenwinkel-Wandlers 20 ein positiver Phasenwinkel $\alpha$ ansteht. Dadurch wird der entsprechende Steuersatz 10 so geregelt, daß von einer symmetrischen Spannungsaufteilung ausgehend, wobei alle Stellerwechselspannungen $u_{St1}$ bis $u_{Stn}$ bei gleicher Amplitude in Phase sind, der Zeiger der Stellerwechselspannung $U_{St2}$ aus der Lage der Zeiger $U_{St1}$, $U_{St3}$, ... $U_{Stn}$ gegen den Uhrzeigersinn um den Betrag des positiven Phasenwinkels $\alpha$ gedreht wird. Da die Trafospannung $u_T$ gleich der Differenz zwischen der Stellerwechselspannung $u_{St2}$ und dem induktiven Spannungsabfall $u_{L2}$ ist, sind die Zeiger der Stellerwechselspannung $U_{St2}$ und des Stromes $I_2$ annähernd in Phase, d.h. nach FIG 2 speist die Wechselspannungsquelle $u_{St2}$ einen Strom $i_2$ in die Sammelschiene. Die anderen Wechselspannungsquellen $u_{St1}$, $u_{St3}$, ..., $U_{Stn}$ erhalten von der Sammelschiene einen Strom $i_1$, $i_3$, ..., $i_n$, da die Trafospannung $u_T$ erstens gleich der Differenz zwischen der Stellerwechselspannung $u_{St1}$ bzw. $u_{St3}$ ... bzw. $u_{Stn}$ und dem induktiven Spannungsabfall $u_{L1}$ bzw. $u_{L3}$ ... bzw. $u_{Ln}$ ist und zweitens die Stromzeiger $I_1$, $I_3$ bis $I_n$ annähernd entgegengesetzt zum jeweiligen Zeiger der Stellerwechselspannungen $U_{St1}$ $U_{St3}$, ..., $U_{Stn}$ sind. Außerdem kann man dem Zeigerdiagramm entnehmen, daß eine Wirkleistung von der Wechselspannungsquelle $u_{St2}$ abgegeben wird, die zu gleichen Teilen von den n-1 Wechselspannungsquellen $u_{St1}$ ... $u_{Stn}$ aufgenommen wird. Diese Wirkleistung ist näherungsweise proportional dem Phasenwinkel $\alpha$ zwischen den Stellerwechselspannungen $u_{St2}$ und $u_{St1}$, $u_{St3}$, ..., $u_{Stn}$.

In FIG 4 ist ein Zeigerdiagramm zum Ersatzschaltbild nach FIG 2 dargestellt, wobei die Kondensatorspannungen $U_{d1}$, $U_{d3}$, ..., $U_{dn}$ jeweils infolge eines Lasteinbruches ansteigen und die Kondensatorspannung $U_{d2}$ absinkt. In diesem Fall erzeugt der erste Komparator 18 eine positive Differenzspannung $\Delta U_1$ und die anderen Komparatoren 18 erzeugen jeweils eine Differenzspannung $\Delta U_2,...,\Delta U_{n-1}$, die alle gleich Null sind. Der ermittelte positive Differenzspannungswert $\Delta U_1$ wird in einen entsprechenden negativen Phasenwinkel $\alpha$ umgesetzt. Dadurch wird der entsprechende Steuersatz 10 so geregelt, daß von einer symmetrischen Spannungsaufteilung ausgehend, wobei alle Steuerwechselspannungen $u_{St1}$, $u_{St3}$ bis $u_{Stn}$ gleicher Amplitude in Phase sind, der Zeiger der Stellerwechselspannung $U_{St2}$ aus der Lage der Zeiger $U_{St1}$ $U_{St3}$, ..., $U_{Stn}$ im Uhrzeigersinn um den Betrag des negativen Phasenwinkels $\alpha$ gedreht wird. In diesem Fall speisen die Wechselspannungsquellen $u_{St1}$, $u_{St3}$, ..., $u_{Stn}$ in die Wechselspannungsquelle $u_{St2}$. Dadurch fließen Ausgleichsströme vom ersten, dritten bis n-ten Kondensator 2 über die entsprechenden Stellglieder 8 in den zweiten Kondensator 2 des Spannungsteilers 4, wodurch die Spannungen $U_{d1}$, ..., $U_{dn}$ an den Kondensatoren 2 des Spannungsteilers 4 wieder symmetrisch werden.

Die FIG 5 zeigt ein Zeigerdiagramm für das Ersatzschaltbild nach FIG 2, wobei die Kondensatorspannung $U_{d2}$ infolge eines Lasteinbruches ansteigt und die anderen Kondensatorspannungen $U_{d1}$, $U_{d3}$, ..., $U_{dn}$ gleichmäßig absinken. Dieser Fall entspricht dem Fall der dem Zeigerdiagramm nach FIG 3 zugrundeliegt.

Jedoch sind zusätzlich die Amplituden der Stellerwechselspannungen $u_{St1}$, $u_{St3}$, ..., $u_{Stn}$ gegenüber der Amplitude der Stellerwechselspannung $u_{St2}$ verringert, wodurch die Stromzeiger $I_1$, $I_3$, ..., $I_n$ jeweils eine deutliche Blindstromkomponente aufweisen. Somit kann man durch eine vorbestimmte Sollwertvorgabe am Sollwertgeber 24 der FIG 1 den Blindstromanteil in den Ausgleichsströmen bestimmen, wodurch nicht nur Wirkleistung von einem Kondensator 2 zum anderen Kondensator 2 des Spannungsteilers 4 geschoben werden kann, sondern auch Blindleistung.

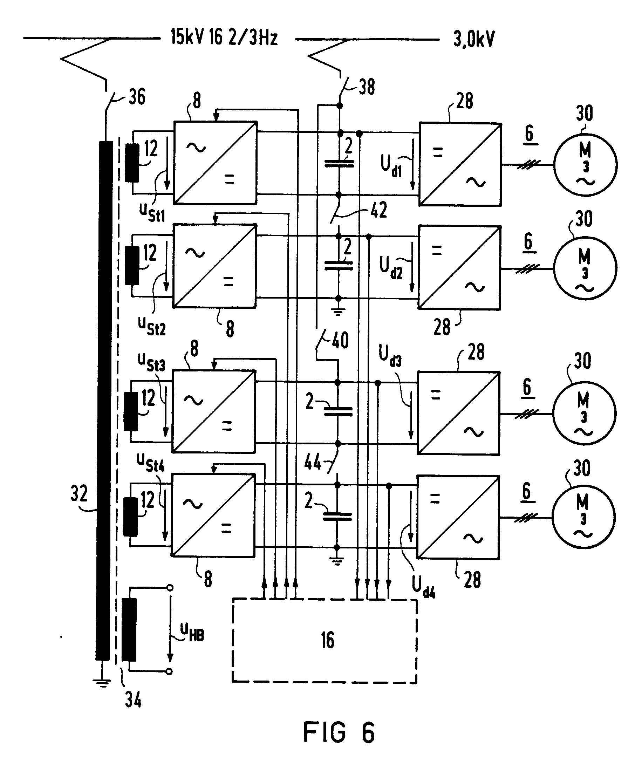

Die FIG 6 zeigt schematisch das Blockschaltbild einer Viersystemlokomotive, die vier Traktionsstromrichter enthält, wobei jeder Traktionsstromrichter einen Drehstrommotor antreibt. Jeder Traktionsstromrichter besteht aus einem Stellglied 8, auch Vierquadrantensteller 4q-S genannt, das eingangsseitig über eine Sekundärwicklung 12 mit dem Traktionstransformator verknüpft ist. Ausgangsseitig ist dem Stellglied 8 ein Zwischenkreiskondensator 2 nachgeschaltet, dem eine veränderliche Last 6, bestehend aus einem Stromrichter 28 und einem Drehstrommotor 30, nachgeschaltet ist. Außerdem ist eine Steuervorrichtung 16 vorgesehen, die u.a. aus den Kondensatorspannungen $U_{d1}$ bis $U_{d4}$ jeweils einen Phasenwinkel als Maß der unsymmetrischen Spannungsaufteilung am kapazitiven Spannungsteiler ermittelt, damit die anliegende Fahrdraht-Gleichspannung jeweils an zwei Kondensatoren 2 symmetrisch aufgeteilt werden kann. Die Primärwicklung 32 des Traktionstransformators wird aus einem Wechselstromnetz mit 16 2/3 Hz bzw. 50 Hz Netzfrequenz gespeist. Außerdem können die Hilfsbetriebe der Lokomotive, die aus Übersichtlichkeitsgründen nicht dargestellt sind, über eine Sekundärwicklung 34 mit Energie versorgt werden. Außerdem sind noch einige Schalter 36 bis 44 vorgesehen, von denen der Schalter 36 über einen Stromabnehmer das Wechselspannungsnetz 15 kV 16 2/3 Hz bzw. 50 Hz mit dem Traktionstransformator verbindet und die Schalter 38 und 40 über einen Stromabnehmer die Zwischenkreiskondensatoren 2 der Traktionsstromrichter mit einem Gleichspannungsnetz 1,5 kV bzw. 3,0 kV verbindet, wobei die Schalter 42 und 44 jeweils zwei Zwischenkreiskondensatoren 2 elektrisch in Reihe schalten.

Während die Traktionsstromrichter aus dem Wechselspannungsnetz versorgt werden, werden die Stellglieder 8 so gesteuert, daß die Zwischenkreisspannung beispielsweise auf 2, 8 kV gehalten werden und daß der Netzstrom, der für den Betrieb der Drehstrommotoren aus dem Wechselspannungsnetz entnommen wird, annähernd oberwellenfrei ist.

Bei Gleichstrombetrieb, d.h. der Schalter 36 ist geöffnet und die Schalter 40 bis 44 sind geschlossen, teilt sich die an jedem kapazitiven Spannungsteiler anstehende Gleichspannung annähernd symmetrisch auf, wenn alle vier Drehstrommotoren im gleichen Betriebspunkt, beispielsweise im Nennbetrieb, sind. Damit auch bei annähernd symmetrischer Belastung der Kondensatoren der beiden kapazitiven Spannungsteiler die Spannungsaufteilung symmetrisch ist, wird ständig die Differenzspannung eines jeden Spannungsteilers mit Hilfe der Steuervorrichtung 16 ermittelt und bei Auftreten von Spannungsdifferenzen die Stellerwechselspannungen $u_{St1}$ und $u_{St2}$ bzw. $u_{St3}$ und $u_{St4}$ gegeneinander gemäß des erzeugten Phasenwinkels $\alpha$ phasenverschoben damit ein Ausgleichsstrom zwischen den Kondensatoren 2 jeweils eines Spannungsteilers über die Stellglieder 8 fließen kann, wodurch die anstehende Gleichspannung am Spannungsteiler symmetrisch aufgeteilt wird. Selbst bei großen Leistungseinbrüchen, beispielsweise beim Schleudern einer Antriebsachse, wird durch das beschriebene Verfahren die jeweils am Spannungsteiler anstehende Gleichspannung symmetrisch aufgeteilt. Dabei ist die maximale Leistung, die bei unsymmetrischer Spannungsaufteilung über ein Stellglied fließen kann, gleich der halben maximalen Leistung, die von einer Last benötigt wird.

Neben der Erzeugung eines Phasenwinkels als Maß der unsymmetrischen Spannungsaufteilung der anstehenden Gleichspannung, steuert die Steuervorrichtung 16 die Stellglieder 8 so, daß an der Sekundärwicklung 34 der Hilfsbetriebe eine Wechselspannung $u_{HB}$ ansteht und die Hilfsbetriebe mit elektrischer Leistung aus dem Gleichspannungsnetz versorgt werden.

Durch das Verfahren zur symmetrischen Spannungsaufteilung einer an einem kapazitiven Spannungsteiler anstehenden Gleichspannung kann man die für ein Wechselspannungsnetz aufgebauten Traktionsstromrichter auch an einem Gleichspannungsnetz hoher Gleichspannung betreiben, ohne dabei die Stromrichter 28 für hohe Gleichspannung aufzubauen, da der Wert der Teilspannungen der anliegenden Gleichspannung maximal den Wert der Zwischenkreisspannung im Wechselstrombetrieb erreichen. Auch die Hilfsbetriebsversorgung braucht sich gegenüber dem Betrieb am Wechselspannungsnetz nicht ändern. Somit erhält man eine Mehrsystemlokomotive, wobei die Sperrspannung der Ventile des Stromrichters 28 bei Gleichstrombetrieb kleiner ist als die Fahrdrahtspannung.

**Patentansprüche**

1. Verfahren zur symmetrischen Spannungsaufteilung einer an einem aus n Kondensatoren (2) bestehenden Spannungsteiler (4) anstehenden Gleichspannung ($U_{G1}$) denen jeweils eine veränderliche Last (6) und ein Stellglied (8) elektrisch parallel geschaltet sind, wobei die Stellglieder (8) mittels Wicklungen (12) mit einem gemeinsamen Kern (14) eingangsseitig elektrisch parallel geschaltet sind, **dadurch gekennzeichnet,** daß n-1 an den n Kondensatoren (2) anstehende Spannungen ($U_{d2}$ bis $U_{dn}$ jeweils mit einem n-ten als Bezugsspannung dienenden Spannungsabfall ($U_{d1}$) am n-ten Kondensator (2) verglichen und die dabei erzeugten Differenzspannungen ($\Delta U_1$ bis $\Delta U_{n-1}$) jeweils in einem vorzeichenbehafteten Phasenwinkel ($\alpha$) umgewandelt werden und daß jeder vorzeichenbehaftete Phasenwinnkel($\alpha$) einem korrespondierenden Steuersatz (10) eines Stellgliedes (8) zugeführt wird, wodurch die mittels Taktung erzeugten Stellerwechselspannung ($u_{St1}$ bis $u_{Stn}$) in beliebiger Frequenz zur Bezugsstellerwechselspannung ($u_{St1}$) entsprechend dem korrespondierenden Phasenwinkel ($\alpha$) phasenverschoben werden, wodurch jeweils ein Ausgleichsstrom ($i_1$ bis $i_n$) zwischen den n Kondensatoren (2) über die Stellglieder (8) zum Fließen kommt.

2. Verfahren nach Anspruch 1, **dadurch gekennzeichnet,** daß jede Stellerwechselspannung ($u_{St1}$ bis $u_{Stn}$) bei vorgegebenem Aussteuerungsverhältnis mittels einer jeweils einem Steuersatz (10) eines Stellgliedes (8) zugeführten Sollspannung regelbar ist.

3. Schaltungsanordnung zur Durchführung des Verfahrens nach Anspruch 1 mit einem aus n Kondensatoren (2) bestehenden Spannungsteiler (4), deren Kondensatoren (2) jeweils eine veränderliche Last (6) und ein Stellglied (8) elektrisch parallel geschaltet sind, wobei die Stellglieder (8) mittels Wicklungen (12), die an einem Kern (14) angebracht sind, eingangsseitig elektrisch parallel geschaltet sind, **dadurch gekennzeichnet,** daß invertierende Eingänge n-1 Vergleicher (18) jeweils mit einem Normierglied (26) der n-1 Kondensatoren (2) verknüpft sind, wobei die nichtinvertierenden Eingänge der n-1 Vergleicher (18) mit einem Normierglied (26) des n-ten Kondensators (2) verknüpft sind, und daß jeder Ausgang der n-1 Vergleicher (18) über einen Spannungsphasenwinkel Wandler (20) mit einem Steuersatz (10) eines jeweils dem invertierenden Eingang des Vergleichers (18) korrespondierenden Stellgliedes (8) verbunden ist, wobei ein Taktgenerator (22) mit jedem Steuersatz (10) verknüpft ist.

**4.** Schaltungsanordnung nach Anspruch 3, **dadurch gekennzeichnet,** daß als Stellglied (8) ein Vierquadrantensteller vorgesehen ist.

**5.** Schaltungsanordnung nach Anspruch 3, **dadurch gekennzeichnet,** daß als veränderliche Last (6) ein über einen Stromrichter (28) gespeister Wechselstrommotor (30) vorgesehen ist.

## Claims

**1.** A method for the symmetrical voltage division of a direct voltage ($U_{G1}$) applied to a voltage divider (4) consisting of n capacitors (2), in parallel with which there are electrically connected in each case a variable load (6) and a controlling element (8), the controlling elements (8) being electrically connected in parallel on the input side by means of windings (12) with a common core (14), characterised in that n-1 voltages ($U_{d2}$ to $U_{dn}$) applied to the n capacitors (2) are each compared with an n-th voltage drop ($U_{d1}$) applied to the n-th capacitor (2), serving as the reference voltage, and the differential voltages ($\Delta U_1$ to $\Delta U_{n-1}$) thereby produced are each converted into a phase angle ($\alpha$) which carries a sign, and in that each phase angle ($\alpha$), carrying a sign, is supplied to a corresponding control unit (10) of a controlling element (8), through which the controller alternating voltages ($u_{St1}$ to $u_{Stn}$), produced by means of clock pulsing, are phase shifted at an optional frequency in relation to a reference controller alternating voltage ($u_{St1}$) according to the corresponding phase angle ($\alpha$), causing a compensating current ($i_1$ to $i_n$) to flow between the n capacitors (2) via the controlling elements (8).

**2.** A method according to claim 1, characterised in that each controller alternating voltage ($u_{St1}$ to $u_{Stn}$) is controllable with a preset control ratio by means of a desired voltage supplied in each case to a control unit (10) of a controlling element (8).

**3.** A circuit arrangement for carrying out the method according to claim 1, with a voltage divider (4) consisting of n capacitors (2), in parallel with each of which capacitors (2) there are electrically connected a variable load (6) and a controlling element (8), the controlling elements (8) being electrically connected in parallel on the input side by means of windings (12) applied to a core (14), characterised in that inverting inputs of the n-1 comparators (18) are linked in each case to a normalizing unit (26) of the n-1 capacitors (2), wherein the non-inverting inputs of the n-1 comparators (18) are linked to a normalizing unit (26) of the n-th capacitor (2), and in that each output of the n-1 comparators (18) is connected via a voltage-phase angle converter (20) to a control unit (10) of a controlling element (8), corresponding in each case to the inverting input of the comparator (18), a clock pulse generator (22) being connected to each control unit (10).

**4.** A circuit arrangement according to claim 3, characterised in that a four quadrant controller is provided as the controlling element (8).

**5.** A circuit arrangement according to claim 3, characterised in that an alternating current motor (30) fed via a power converter (28) is provided as the variable load (6).

## Revendications

**1.** Procédé de répartition symétrique d'une tension continue ($U_G$), qui est appliquée à un diviseur de tension (4) constitué par n condensateurs (2) avec lesquels sont branchés électriquement en parallèle respectivement une charge variable (6) et un circuit de réglage (8), les circuits de réglage (8) étant raccordés électriquement en parallèle, côté entrée, au moyen d'enroulements (12) à un noyau commun (14), caractérisé par le fait que n-1 tensions ($U_{d2}$ à $U_{dn}$), appliquées aux n condensateurs (2) sont comparées respectivement à une n-ème chute de tension ($U_{d1}$) utilisée comme tension de référence et apparaissant aux bornes du n-ème condensateur (2) et que les tensions différentielles ($\Delta u_1$ à $\Delta U_{n-1}$), qui sont alors produites, sont converties respectivement en un angle de phase ($\alpha$) affecté d'un signe et que chaque angle de phase ($\alpha$) affecté d'un signe est envoyé à l'unité de commande correspondante (10) d'un circuit de réglage (8), ce qui a pour effet que les tensions alternatives ($u_{St1}$ à $U_{Stn}$) du régulateur, qui sont produites au moyen de la commande cadencée, sont déphasées avec une fréquence quelconque par rapport à la tension alternative ($u_{St1}$) de réglage de référence conformément à l'angle de phase ($\alpha$) correspondant, ce qui amène respectivement un courant de compensation ($i_1$ à $i_n$) à circuler entre les n condensateurs (2) par l'intermédiaire des circuits de réglage (2).

**2.** Procédé suivant la revendication 1, caractérisé par le fait que chaque tension alternative de réglage ($u_{St1}$ à $u_{Stn}$) est réglable, pour un rapport prédéterminé de modulation, au moyen d'une tension de consigne envoyée respectivement à l'unité de commande (10) d'un circuit de réglage (8).

3. Montage pour la mise en oeuvre du procédé suivant la revendication 1, comportant un diviseur de tension (4) constitué par n condensateurs (2), et dans lequel respectivement une charge variable (6) et un circuit de réglage (8) sont branchés électriquement en parallèle avec les condensateurs (2) et les circuits de réglage (8) sont branchés électriquement en parallèle, côté entrée, au moyen d'enroulements (12), qui sont montés sur un noyau (14), caractérisé par le fait que des entrées inverseuses des n-1 comparateurs (18) sont raccordées respectivement à circuit de normalisation (26) des n-1 condensateurs (2), les entrées non inverseuses des n-1 comparateurs (18) étant raccordées à un circuit de normalisation (26) du n-ème condensateur (2), et que chaque sortie des n-1 comparateurs (18) est raccordée, par l'intermédiaire d'un convertisseur tension-angle de phase (20), à une unité de commande (10) d'un circuit de réglage (8) qui correspond respectivement à l'entrée inverseuse du comparateur (18), un générateur de cadence (22) étant raccordé à chaque unité de commande (10).

4. Montage suivant la revendication 3, caractérisé par le fait qu'il est prévu comme circuit de réglage (8), un régulateur à quatre quadrants.

5. Montage suivant la revendication 3, caractérisé par le fait qu'il est prévu, comme charge variable (6), un moteur à courant alternatif (30) alimenté par un convertisseur statique (30).

FIG 1

FIG 2

FIG 3

FIG 4

FIG 5

FIG 6